# EUROPÄISCHE PATENTANMELDUNG

(11) **EP 1 936 138 A2**
(43) Veröffentlichungstag der Anmeldung: **25.06.2008**
(21) Anmeldenummer: 07118847.8
(22) Anmeldetag: 19.10.2007
(51) Int. Cl.: F01N 3/20, B60K 15/00, C01C 1/08

(54) **Luftbereitstellungseinrichtung**

(30) Priorität: 19.12.2006 DE 102006059953
(71) Anmelder: Pierburg GmbH, 41460 Neuss (DE)
(72) Erfinder: Lappan, Rolf, 50733 Köln (DE); Nowak, Martin, 40476 Düsseldorf (DE); Haushälter, Peter, 41065 Mönchengladbach (DE); Köster, Andreas, 45149 Essen (DE)
(74) Vertreter: Patentanwälte ter Smitten

(57) **Zusammenfassung**

Eine Luftbereitstellungseinrichtung zur Bereitstellung von Luft zum Fördern von Harnstoffpellets in Kraftfahrzeug-Abgaseinrichtungen weist eine Kompressoreinrichtung (12) auf, die mit einem Elektromotor (10) verbunden ist. Die Kompressoreinrichtung (12) weist einen Kompressor-Auslass (16) zur Abgabe der Förderluft und einen Kompressor-Einlass (14) zum Ansaugen zu komprimierender Luft auf. Der Elektromotor weist zur Luftkühlung einen Luftkanal (24) auf. Die von dem Kompressor angesaugte Luft wird zunächst durch den Luftkanal (24) zum Kühlen des Elektromotors geführt. Daher ist ein Luftkanalauslass (22) des Luftkanals (24) mit dem Kompressor-Einlass (14), insbesondere über einen Verbindungskanal (32) verbunden,

## Beschreibung

Die Erfindung betrifft eine Luftbereitstellungseinrichtung zur Bereitstellung von Luft zum Fördern von Harnstoffpartikeln in Kraftfahrzeug-Abgaseinrichtungen.

Zur Aufbereitung von Abgasen in Kraftfahrzeugen ist es bekannt, in der Abgaseinrichtung dem Abgas Harnstoff zuzuführen. Dies erfolgt durch Einspritzen flüssigen Harnstoffs oder durch das Zuführen von Harnstoffpartikeln, wie Harnstoffpellets. Die Harnstoffpellets werden thermolytisch aufbereitet. Die Pellets werden in einem Behälter bereitgestellt und aus diesem, beispielsweise mit Hilfe einer Vereinzelungseinrichtung, einzeln entnommen und der Abgaseinrichtung zugeführt. Der Transport der Pellets erfolgt hierbei beispielsweise mittels Druckluft Hierzu ist ein Druckluftkompressor vorgesehen. Der Kompressor ist mit einem Elektromotor verbunden. Zusätzlich ist es erforderlich, dem Kompressor eine Trocknungseinrichtung sowie eine Filtereinrichtung zum Reinigen der Luft vorzuschalten. Ein Trocknen der Luft ist erforderlich, um ein Beschädigen der Pellets während des Transports aufgrund der Feuchtigkeit zu vermeiden und das Auftreten von Ablagerungen in dem Pellet-Transportkanal zu verhindern. Um das Auftreten von Verunreinigungen und Ablagerungen in dem Transportkanal zu vermeiden, ist es ferner erforderlich, die Luft zu filtern. Andernfalls könnten derartige Verunreinigungen auch in den Thermolysereaktor gelangen und diesen beschädigen. Ferner ist es erforderlich eine Schalldämpfungseinrichtung vorzusehen, um die Ansauggeräusche des Kompressors zu reduzieren. Derartige Luftbereitstellungseinrichtungen weisen den Nachteil auf, dass ein großer Bauraum erforderlich ist. Ferner ist es zusätzlich erforderlich, eine Kühlung für den Elektromotor vorzusehen.

Aufgabe der Erfindung ist es, eine Luftbereitstellungseinrichtung zu schaffen, die einen vereinfachten Aufbau aufweist.

Die Lösung der Aufgabe erfolgt erfindungsgemäß durch die Merkmale des Anspruchs 1.

Die erfindungsgemäße Luftbereitstellungseinrichtung wurde zur Bereitstellung von Luft zum Fördern von Harnstoffpartikeln, wie Harnstoffpellets in Kraftfahrzeug-Abgaseinrichtungen entwickelt. In der bevorzugten Ausgestaltung handelt es sich somit um eine Pellet-Fördereinrichtung, bei der das Fördern der Harnstoffpellets durch Druckluft erfolgt, Die erfindungsgemäße Luftbereitstellungseinrichtung weist eine Kompressoreinrichtung auf, die mit einem Elektromotor verbunden ist. Zur Abgabe der Förderluft, die zum Fördern der Harnstoffpellets genutzt wird, weist die Kompressoreinrichtung einen Kompressor-Auslass auf. Ferner weist die Kompressoreinrichtung einen Kompressor-Einlass zum Ansaugen zu komprimierender Luft auf. Erfindungsgemäß ist ein Elektromotor vorgesehen, dessen Kühlung durch Luftkühlung erfolgt. Hierzu weist der Elektromotor einen Luftkanal auf, durch den zur Kühlung Luft strömt. Hierbei ist der Luftkanal beispielsweise in einem Gehäuse des Elektromotors integriert, Der Luftkanal ist insbesondere derart angeordnet, dass die Bürstenbrücke eines DC-Motors gekühlt wird. Bei der Anwendung mit EC-Motor ist hier eine Kühlung der Elektronik durch die angesaugte Luft möglich.

Erfindungsgemäß ist ein Luftkanalauslass des zur Kühlung des Elektromotors dienenden Luftkanals mit dem Kompressor-Einlass verbunden. Durch diese fluidische Verbindung wird erfindungsgemäß vom Kompressor Luft angesaugt, die vorher zumindest teilweise durch den Luftkanal geführt wurde und zur Kühlung des Elektromotors genutzt wurde. Die von dem Kompressor angesaugte Luft wird somit zuvor zur Kühlung des Elektromotors verwendet. Dies hat den Vorteil, dass eine gesonderte Kühlung des Elektromotors nicht erforderlich ist.

Die zu komprimierende Luft wird somit erfindungsgemäß über den Luftkanaleinlass des Luftkanals der Motorkuhlung durch den Motor hindurch zum Luftkanalauslass der Luftkühlung des Elektromotors angesaugt. Von dem Luftkanalauslass gelangt die Luft sodann vorzugsweise über einen Verbindungskanal zum Kompressor-Einlass. Der Luftkanal kann durch das Motorgehäuse selbst ausgebildet sein, indem als Luftkanal ein Zwischenraum zwischen dem Motor und dem Motorgehäuse vorgesehen ist. Ebenso kann der Luftkanal auch Seitenkanäle und Abzweigungen aufweisen, um einzelne Bereiche des Elektromotors besonders gut zu kühlen.

Bei einer besonders bevorzugten Ausführungsform ist in dem Verbindungskanal, der zwischen dem Luftkanalauslass und dem Kompressor-Einlass angeordnet ist, eine Filtereinrichtung und/ oder eine Trockungseinrichtung angeordnet. Dies hat den Vorteil, dass eine äußerst kompakte Bauweise möglich ist. Vorzugsweise ist die Filtereinrichtung in Strömungsrichtung der Trocknungseinrichtung vorgeschaltet. Als Filtereinrichtung kann ein herkömmlicher, insbesondere auswechselbarer Filter vorgesehen sein, bei dem es sich vorzugsweise um einen Trockenfilter handelt,

Die Trockeneinrichtung kann ein Silikagel oder ähnliche Trocknungsmittel aufweisen, das insbesondere in Kissenform vorgesehen ist. Ebenso kann eine Lufttrocknung mittels Molekularsieb oder Absorptionsabscheider erfolgen. Ebenso kann die Trocknungseinrichtung eine Kombination einzelner Vorrichtungen zum Trocknen aufweisen.

Vorzugsweise kann im Bereich der Trocknungseinrichtung ein Feuchtigkeitssensor vorgesehen sein. Dieser kann einerseits dazu dienen, die Funktion der Trocknungseinrichtung zu überwachen und andererseits festzustellen, wann beispielsweise Silikakissen ausgetauscht werden müssen.

Um eine möglichst einfache Wartung zu ermöglichen, ist es besonders vorteilhaft, die Trocknungseinrichtung sowie die Filtereinrichtung in einer gemeinsamen Patrone vorzusehen. Für die Wartung ist sodann lediglich der Austausch der Patrone erforderlich.

In einer bevorzugten Weiterbildung der Erfindung ist der Verbindungskanal, durch den der Auslass des Luftkanals mit dem Einlass des Kompressors verbunden ist, derart angeordnet, dass er den Elektromotor teilweise umgibt. Hierdurch ist eine kompakte Bauweise möglich. Insbesondere ist der Verbindungskanal im Wesentlichen L-förmig ausgebildet, bzw. weist einen L-förmigen Abschnitt auf. Hierbei verläuft ein Teil des L-förmigen Verbindungskanals, vorzugsweise in Längsrichtung des Elektromotors, d, h. in Richtung der Motorwelle. Der andere Schenkel des L-förmigen Verbindungskanals verläuft im Wesentlichen senkrecht hierzu und insbesondere parallel zu einer Stirnseite des Elektromotors. Vorzugsweise ist der Verbindungskanal mit dieser zweiten Stirnseite des Elektromotors verbunden. An dieser zweiten Stirnseite des Elektromotors bzw. des Gehäuses des Elektromotors ist vorzugsweise der Luftauslass sowie der Lufteinlass des Luftkanals, durch den die zur Kühlung des Elektromotors dienende Luft geführt wird, vorgesehen. Die gegenüberliegende erste Stirnseite des Elektromotors bzw. des Gehäuses des Elektromotors ist vorzugsweise mit dem Kompressor verbunden. Hierdurch ist eine äußerst kompakte Bauweise der Luftbereitstellungseinrichtung möglich.

Nachfolgend wird die Erfindung anhand einer bevorzugten Ausführungsform unter Bezugnahme auf die anliegenden Zeichnungen erläutert.

Es zeigen:

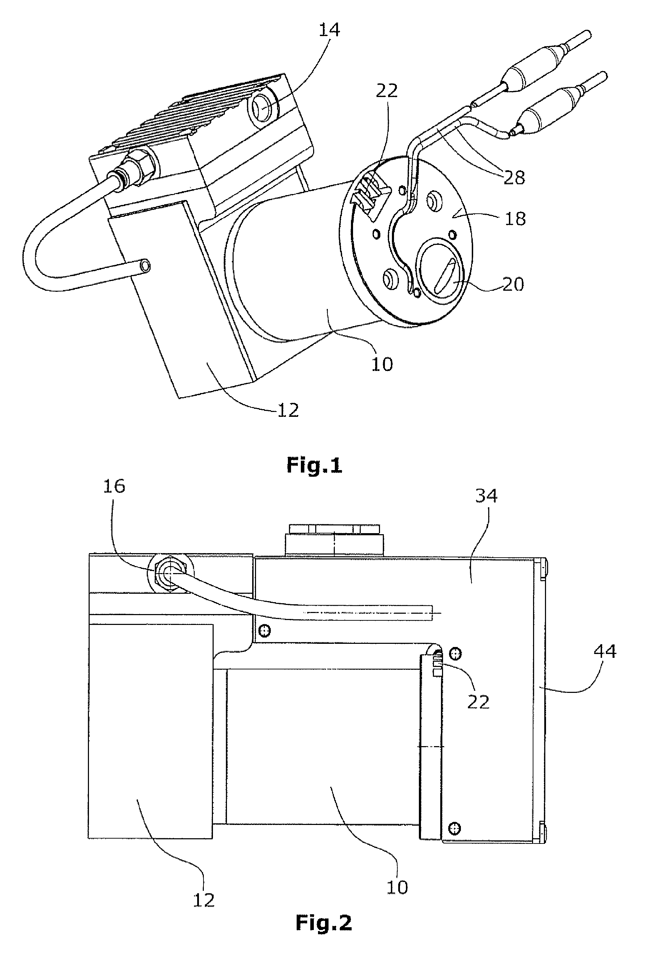

- Fig. 1: eine schematische perspektivische Ansicht der Luftbereitstellungseinrichtung ohne Verbindungskanal,
- Fig. 2: eine schematische Draufsicht der Luftbereitstellungseinrichtung und

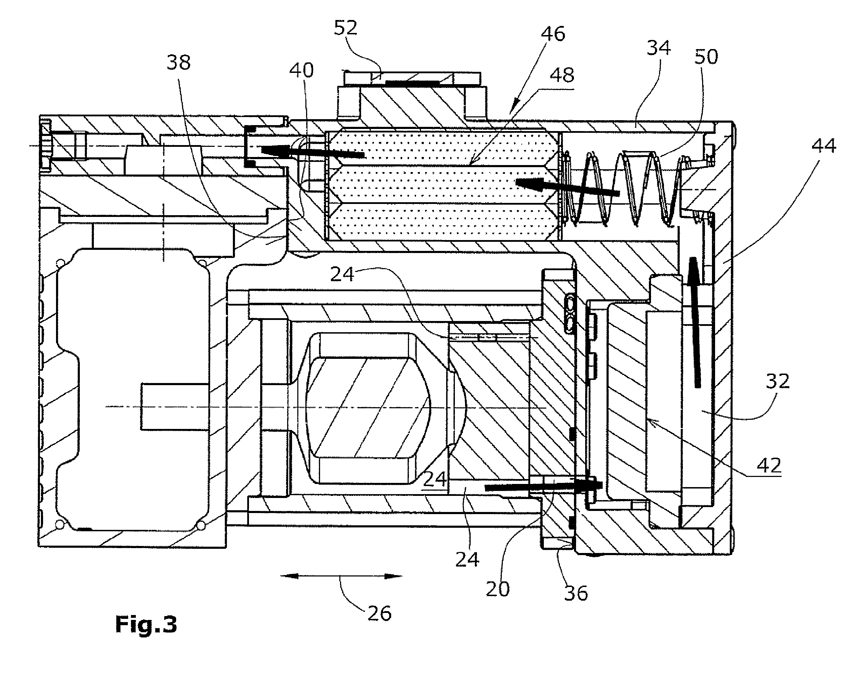

- Fig. 3: eine schematische Schnittansicht der Luftbereitstellungseinrichtung in Längsrichtung.

Die Luftbereitstellungseinrichtung weist einen Elektromotor 10 auf, bei dem es sich insbesondere um einen DC-Motor handelt. Der Elektromotor 10 ist mit einer Kompressoreinrichtung 12 zum Antreiben derselben verbunden. Die Kompressoreinrichtung 12 weist einen Kompressoreinlass 14 auf, durch den zu komprimierende Luft angesaugt wird. Ferner weist die Kompressoreinrichtung 12 einen Kompressor-Auslass 16 auf. Über den Kompressor-Auslass 16 wird die komprimierte Luft zur Förderung von Harnstoffpartikeln, beispielsweise einem entsprechenden Pelletförderkanal zugeführt.

Der Elektromotor 10 weist an einer zweiten Stirnseite 18 einen Luftkanaleinlass 20 sowie einen Luftkanalauslass 22 auf. Innerhalb eines Gehäuses des Elektromotors 10 verläuft von dem Luftkanaleinlass 20 zum Luftkanalauslass 22 zur Kühlung der Bauteile des Elektromotors ein Luftkanal 24.

Die zweite Stirnseite 18 des Elektromotors 10 verläuft senkrecht zu einer Längsrichtung 26 des Elektromotors 10. Hierbei entspricht die Längsrichtung des Elektromotors 10 der Richtung der Motorwelle. Mit der zweiten Stirnseite 18 können ferner auch elektrische Zuleitungen 28 zum Steuern des Elektromotors 10 verbunden sein. An einer der zweiten Stirnseite 18 gegenüberliegenden ersten Stirnseite 30 ist der Elektromotor 10 mit der Kompressoreinrichtung 12 verbunden.

Erfindungsgemäß ist der Luftkanalauslass 22 mit dem Kompressor-Einlass 14 über einen Verbindungskanal 32 verbunden. Der Verbindungskanal 32 ist in dem dargestellten Ausführungsbeispiel durch ein hohles, im Wesentlichen L-förmiges Gehäuse 34 ausgebildet. Hierbei liegt eine Seite 36 des Gehäuses 34 an der zweiten Stirnseite 18 des Elektromotors an, so dass eine Verbindung zwischen dem Luftkanalauslass 22 und dem Verbindungskanal 32 hergestellt ist. Eine flache Seite 38 ist mit einer Seite 40 des Kompressors verbunden. An der Seite 40 des Kompressors ist der Kompressoreinlass 14 angeordnet.

Innerhalb des den Verbindungskanal 32 ausbildenden Gehäuses ist eine Filtereinrichtung 42 angeordnet. Im dargestellten Ausführungsbeispiel weist das Gehäuse 34 einen Deckel 44 auf. Durch Entfernen des Deckels 44 ist ein Auswechseln der Filtereinrichtung 42 auf einfache Weise möglich.

Zur Trocknung der Luft ist ferner eine Trocknungseinrichtung 46 innerhalb des Verbindungskanals 42 angeordnet. Die Trocknungseinrichtung 46 ist der Filtereinrichtung 42 in Strömungsrichtung nachgeschaltet. Im dargestellten Ausführungsbeispiel weist die Trocknungseinrichtung mehrere Silikakissen 48 auf. Diese werden über eine Federeinrichtung 50, die sich am Deckel 44 abstützt in Position gehalten.

Im Bereich der Trocknungseinrichtung 46 ist ferner ein Feuchtigkeitssensor 52 angeordnet. Hierbei kann es sich um ein Indikatorpapier handeln, um auf einfache Weise überprüfen zu können, ob die Luft durch die Trocknungseinrichtung 46 ausreichend getrocknet wird. Ebenso ist es möglich, einen elektronischen Feuchtigkeitssensor 52 vorzusehen.

Ferner ist es möglich, dass die Stirnseite bzw. Platte 18 als Träger für die Elektronik eines EC-Motors verwendet wird. Auch hier erfolgt die Kühlung durch die angesaugte Luft. Die Verwendung eines EC-Motors hat aufgrund seines verschleißfreien Laufs ferner den Vorteil, dass die Luftfiltereinheit nicht zusätzlich verschmutzt wird.

## Patentansprüche

1. Luftbereitstellungseinrichtung zur Bereistellen von Luft zum Fördern von Harnstoffpartikeln in Kraftfahrzeug-Abgaseinrichtungen, mit
einer mit einem Elektromotor (10) verbundenen Kompressoreinrichtung (12) mit einem Kompressor-Auslass (16) zur Abgabe der Förderluft und einem Kompressor-Einlass (14) zum Ansaugen zu komprimierender Luft,
**dadurch gekennzeichnet, dass**
der Elektromotor (10) zur Luftkühlung einen Luftkanal (24) aufweist und ein Luftkanalauslass (22) des Luftkanals (24) mit dem Kompressoreinlass (14) verbunden ist.

2. Luftbereitstellungseinrichtung nach Anspruch 1, **dadurch gekennzeichnet, dass** der Elektromotor (10) ein Gehäuse (20) aufweist, in das der Luftkanal (24) integriert ist.

3. Luftbereitstellungseinrichtung nach Anspruch 1 oder 2, **gekennzeichnet durch** einen zwischen dem Luftkanalauslass (22) und dem Kompressor-Einlass (14) angeordneten Verbindungskanal (32), in dem eine Filtereinrichtung (42) und/ oder eine Trocknungseinrichtung (46) angeordnet ist.

4. Luftbereitstellungseinrichtung nach Anspruch 3, **dadurch gekennzeichnet, dass** der Verbindungskanal (32) den Elektromotor (10) teilweise umgibt, insbesondere L-förmig ausgebildet ist.

5. Luftbereitstellungseinrichtung nach einem der Ansprüche 1 - 4, **dadurch gekennzeichnet, dass** der Elektromotor (10) in Längsrichtung (26) über eine erste Stirnseite (30) mit der Kompressoreinrichtung (12) verbunden ist.

6. Luftbereitstellungseinrichtung nach einem der Ansprüche 1-5, **dadurch gekennzeichnet, dass** der Luftauslass (22) und ein Lufteinlass (20) des Luftkanals (24) des Elektromotors (10) an derselben, insbesondere einer zweiten Stirnseite (18) des Elektromotors (10) vorgesehen ist.

7. Luftbereitstellungseinrichtung nach einem der Ansprüche 3 - 6, **dadurch gekennzeichnet, dass** sich ein Teil des Verbindungskanals (32) in Längsrichtung (26) des Elektromotors (10), insbesondere über dessen gesamte Länge erstreckt.

8. Luftbereitsteilungseinrichtung nach einem der Ansprüche 1 - 7, **gekennzeichnet durch** einen insbesondere im Bereich der Trockeneinrichtung (46) vorgesehenen Feuchtigkeitssensor (52).

9. Luftbereitstellungseinrichtung nach einem der Ansprüche 3-8, **dadurch gekennzeichnet, dass** die Filtereinrichtung (42) und die Trockeneinrichtung (46) in einer gemeinsamen Patrone zum gemeinsamen Auswechseln angeordnet sind.
